Europäisches Patentamt

European Patent Office

Office européen des brevets

(19)

(11) Publication number: **0 441 972 A1**

(12) **EUROPEAN PATENT APPLICATION**
**published in accordance with Art.**
**158(3) EPC**

(21) Application number: 90912936.3

(22) Date of filing: 04.09.90

(86) International application number:
PCT/JP90/01129

(87) International publication number:
WO 91/03704 (21.03.91 91/07)

(51) Int. Cl.⁵: **G01B  11/00, G01B 11/24**

(30) Priority: 05.09.89 JP 228260/89

(43) Date of publication of application:
21.08.91 Bulletin  91/34

(84) Designated Contracting States:
DE FR GB

(71) Applicant: **FANUC LTD.**
**3580, Shibokusa Aza-Komamba Oshino-mura**
**Minamitsuru-gun, Yamanashi 401-05(JP)**

(72) Inventor: **HIRAIZUMI, Mitsuo 581-16,**
**Kitano-cho**
**Hachioji-shi**
**Tokyo 192(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

(54) OBJECT RECOGNITION METHOD BY OTPICAL CUTTING METHOD.

(57) This invention relates to an object recognition method capable of recognizing quickly an object by an optical cutting method. A pattern element curve (A, B, C) forming part of the pattern image, which is obtained when a coded pattern beam is projected from a projector onto an object in a specific posture through a liquid crystal shutter array, is selected and model data consisting of numeric value parameters containing the distance (A, B) between both ends of the curve are extracted from this curve. Model data are generated in accordance with several object postures. When object recognition processing is carried out, belt-like beam and reversed pattern beam ob-tained by reversing brightness of the former are projected sequentially to the object so as to obtain two images and two slit optical images (a ~ e, a' ~ e') are formed on the basis of these two images. Collation data consisting of numeric value parameters containing the distance between the two points (bc, b'c') on each image are extracted from each of the slit optical images. When the difference between the distance parameter (bc, b'c') of the collation data and the distance parameter (AB) of any one of the model data is within an allowable range, the object is judged to be in a posture associated with that model data.

EP 0 441 972 A1

FIG. I

LIQUID CRYSTAL CONTROLLER

13

11

12

14

CAMERA

20

16

IMAGE PROCESSING DEVICE

15

15a

17

2

## Technical Field

The present invention relates to an object recognition method utilizing an optical cutting technique, and more particularly, to a method of this kind capable of rapidly recognizing an object.

## Background Art

A three-dimensional vision system utilizing an optical cutting technique for recognizing an object on a three-dimensional basis is conventionally known, and is used as a component of an inspection system or as a visual sensor of an industrial robot, for example. A vision sensor of this type operates to generate slitted images of an object, while changing a portion of the object on which slitted light is projected, and sequentially measures the positions of various portions of the object on the basis of the slitted images, to thereby determine the position of the whole object. However, this measurement requires a great deal of information to be processed and much time.

In order to shorten the measurement time, it is known to perform the position measurement of the object in accordance with a plurality of images of the object obtained by sequentially projecting different types of patterned light onto the object (Japanese Provisional Patent Publication No. 60-152903), for example. According to this prior art, n different types of coded patterned light are projected onto the object, the resultant images are binary-coded, and the binary-coded images of n different types are combined with each other. This makes it possible to obtain an image created by coding and dividing a space in which the object exists into $2^n$ sector areas. Hereinafter, the image is referred to as a spatial coded image. This image corresponds to an image which is obtained by sequentially projecting successive $2^n$ strip-form light beams on the object, by binary-coding the resultant $2^n$ images, and by superposing these images one another. The spatial position of the object can be measured in accordance with trigonometrical survey, by the use of the spatial coded image and known parameters representing the positional relation between a light source and a camera.

However, this type of measuring method still necessitates long measurement time, and hence cannot be applied to a checking vision system or a robot vision system of a type where the object must be recognized in a short period of time.

Further, if a plurality of slitted light beams are sequentially projected on the object as described in the beginning so as to measure the object in a three-dimensional manner by use of the optical cutting technique, the number of operations of image creation and analysis increases, whereas if a plurality of slitted light beams are simultaneously projected on the object so as to reduce the number of operations of image creation and analysis, the slitted light beams are superposed on one another, thereby making it difficult to effect the image analysis. In this respect, conventionally proposed is a method wherein strip-form light and reversal light, which is reversed in light/darkness as compared with the strip-form light, are sequentially projected onto an object, to thereby create two slitted light images corresponding to opposite edges of the strip-form light (Japanese Patent Application No. 63-21518). According to the proposed method, a first difference image is derived by subtracting one of the two images, obtained by projecting the strip-form light and the reversal light having the inverted brightness, from the other image for respective picture elements, and a second difference image is derived by subtracting the latter image from the former image. Then, a first slitted light image is created at that position at which the first difference image changes in brightness from darkness to light and the second difference image changes from light to darkness, and a second slitted light image is also created at that position at which the first difference image changes from light to darkness and the second difference image changes from darkness to light.

The object can be recognized based on these slitted light images, but the slitted light projected onto the object is also projected on the vicinity of the object. Thus, the slitted light image will contain contribution of the slitted light projected on the vicinity of the object in addition to contribution of the slitted light projected on the object. Therefore, it becomes necessary to remove the contribution of the slitted light projected on the vicinity of the object, so as to extract only the contribution, to the slitted light image, of the slitted light projected on the object. To achieve this, there is provided a method of previously sampling an image and teaching the area of the object in the sampled image to the vision system. However, if the object has a complicated shape or the object assumes various orientations, it is actually difficult to practice this method. That is, to practice the method, if a large number of slitted light images obtained when the object assumes various orientations are previously instructed to the vision system, and an actual slitted light image is compared with these sampled images so as to recognize the object, an amount of information to be instructed and to be compared becomes excessively large.

## Disclosure of the Invention

An object of the present invention is to provide an object recognition method capable of rapidly recognizing an object by the use of a optical cutting technique.

In order to achieve the above object, the present invention comprises the steps of: (a) extracting model data from an image of an object which assumes a particular orientation, the image of the object being obtained by projecting a plurality of coded patterned light beams on the object, the model data permitting the object assuming the particular orientation to be specified; (b) extracting collate data from an image of the object obtained by projecting slitted light on the object, the collate data permitting the object to be specified; and (c) determining whether or not the collate data coincides with the model data.

As described above, according to the present invention, since a determination is made as to whether or not the model data, extracted from the image of the object obtained by projecting patterned light on the object assuming the particular orientation, and the collate data, extracted from the image of the object obtained by projecting the slitted light on the object, coincide with each other, it is possible to determine that the object assumes the particular orientation when both data coincide with each other, whereby the object can be recognized. Further, the model data and the collate data are sufficient only if they can identify the object assuming the particular orientation, and hence the data can be constituted by numeral parameters, for example. Therefore, an amount of information to be stored and an amount of information to be processed for recognition of the object can be reduced, whereby the object can be rapidly recognized. This makes it possible to attain a high-speed vision system for robots and checking systems by using the method of the present invention.

Brief Description of the Drawings

Fig. 1 is a schematic diagram showing a three-dimensional vision system to which is applied an object recognition method according to one embodiment of the present invention;

Fig. 2 is a schematic perspective view showing, by way of example, an object;

Fig. 3 is a schematic perspective view showing, by way of example, a spatial coded image obtained by projecting a plurality of patterned light beams on the object of Fig. 2;

Fig. 4 is a view shoring, by way of example, a patterned image element used for creating model data; and

Fig. 5 is a view showing, by way of example, a slitted light image.

Best Mode of Carrying Out the Invention

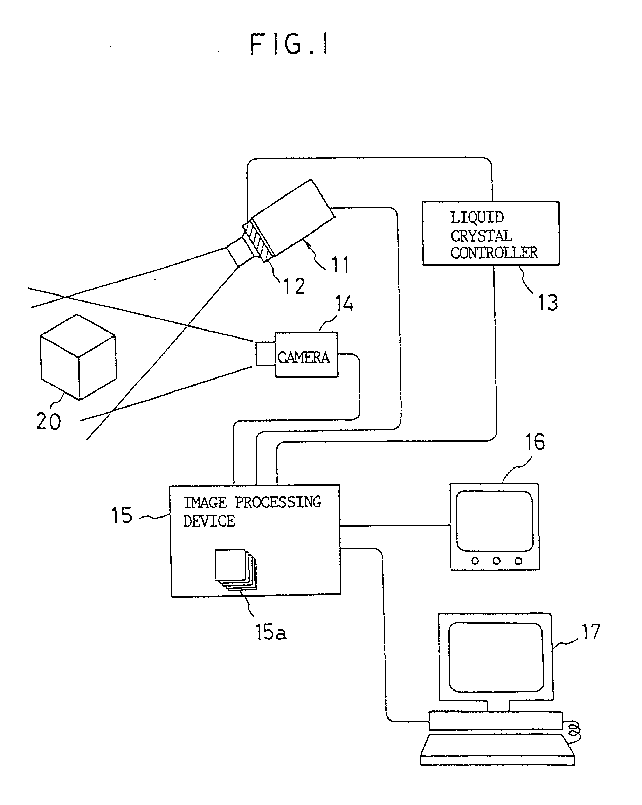

Referring to Fig. 1, a three-dimensional vision system for embodying an object recognition method of an embodiment of the present invention is mounted on a robot or an inspection system, for example. The vision system comprises a slide projector 11 for projecting light on an object 20, e.g., a connector, via a liquid crystal shutter array 12, a liquid crystal controller 13 for controlling operation of the shutter array 12, a camera 14 disposed at a location away from the projector 11, and an image processing device 15 for controlling operations of these elements 11, 13 and 14. Further, the vision system comprises a monitor television unit 16 for displaying an image on its screen, and an interactive system terminal 17 for data input. The object 20 assumes various orientations in the visual field of the camera 14.

The liquid crystal shutter array 12 has a liquid crystal plane (not shown) which is divided into a plurality of strip-form segments, e.g., 128 segments, respectively extending in a horizontal direction, and electrodes (not shown) of the same number as the liquid crystal segments, and is designed to permit the light supplied from the projector 11 to be transmitted towards the object 20 via the liquid crystal segments corresponding to those electrodes to which a driving voltage is applied. When the projector 11 is operated under the control of the image processing device 15, and pattern data coded in accordance with a Gray code is supplied from the image processing device 15 to the controller 13, a driving voltage is applied to corresponding electrodes of the liquid crystal shutter array 12 under the control of the controller 13, so as to permit the light from the projector 11 to be transmitted through the liquid crystal segments corresponding to the pattern data, whereby patterned light which is coded in accordance with the Gray code is generated (see, Japanese Provisional Patent Publication No. 60-152903).

When different pattern data indicative of a strip-form pattern is supplied from the image processing device 15 to the controller 13, the liquid crystal shutter array 12 cooperates with the projector 11 to generate wide strip-form light. Further, when reversal pattern data is supplied, the shutter array 12 generates reversal patterned light which is reversed in light/darkness as compared with the strip-form light.

The image processing device 15 receives a video signal which is supplied from the camera 14 and which indicates an image of the object 20 obtained when the patterned light, strip-form light or reversal patterned light is projected from the projector 11 via the shutter array 12 or when no light is projected, carries out an image processing operation, and causes the result of the processing operation to be stored into a corresponding one of frame memories 15a.

Now, the operation of the three-dimensional vision system with the above construction will be explained.

Before the vision system is actually operated, the projector 11 mounted with the liquid crystal shutter array 12, and camera 14 are set in a predetermined positional relation, and a calibration object corresponding to the object 20 is set in the visual field of the camera 14. Then, calibration for the vision system is carried out in a conventional manner.

Next, the vision system is operated to create model data used in the object recognition process. To this end, the object 20 is first set in the visual field of the camera 14 in such a manner that it assumes a particular orientation and is positioned at a predetermined location. Then, the image processing device 15 receives, via the camera 14, an image of the object 20 obtained when no light is projected on the object, and causes the image to be stored into one of the frame memories 15a. After this, in response to the operation of the system terminal by the operator, first coded pattern data is transferred from the image processing device 15 to the liquid crystal controller 13. In response to this pattern data input, a driving voltage is applied to corresponding electrodes of the liquid crystal shutter array 12 under the control of the liquid crystal controller 13, so that those of the liquid crystal segments of the shutter array 12 which correspond to the above electrodes can be set into the light transmission state, whereas the other liquid crystal segments will be set into the light interruption state. As a result, patterned light corresponding to the pattern data is projected on the object 20 from the projector 11 via the shutter array 12. Then, the object 20 is photographed by the camera 14 operated under the control of the image processing device 15, and a video signal representing an image (patterned image) of the object 20 and the vicinity thereof is supplied to the image processing device 15 from the camera 14. The image processing device 15 subtracts the image obtained when no light is projected from the patterned image for respective picture elements, to thereby create a patterned image having background noise eliminated. Then, the image processing device converts the thus obtained patterned image into binary data, and causes the binary data to be stored into one of the fame memories 15a.

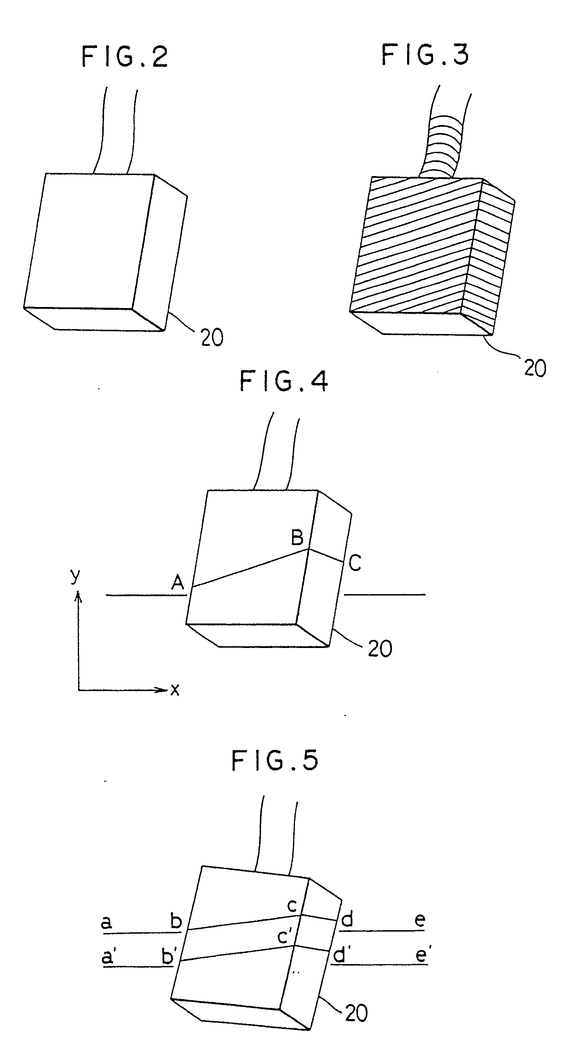

The same process is carried out for a second to n-th data, to thereby derive $n$ different types of binary coded patterned images. A spatial coded image shown in Fig. 3 can be obtained by combining the binary coded patterned images in a manner disclosed in Japanese Provisional Patent Publication No. 60-152903. Pattern lines shown by solid lines in Fig. 3 indicate boundaries between adjacent spatial codes.

Next, the image processing device 15 cooperates with an operator to extract, from the spatial coded image, model data specifying the object 20 which assumes a particular orientation. To this end, with reference to a multi-slit image obtained by extracting the boundaries of spatial codes displayed on the monitor television unit under the control of the image processing device 15, the operator operates the system terminal 17 so as to specify, on the television screen, an image element constituting part of the multi-slit image, e.g., a pattern element curve which extends along symbols A, B and C shown in Fig. 4. The pattern element curve changes stepwise in the positive direction of the y axis at the point A, obliquely upwardly extends from the point A to the point B at an angle of $\theta 1$ (not shown) on the xy plane, and changes in a roof (convex) form at the point B. Further, the curve obliquely downwardly extends from the point B to the point C at an angle of $\theta 2$ (not shown), and changes stepwise in the negative direction of the y axis at the point C.

The image processing device 15 derives the positions of the points A, B and C on the pattern element curve in the space where the vision system is disposed, by means of trigonometric survey, on the basis of geometric parameters (a distance between the projector 11 and the camera 14; an angle formed between a straight line connecting the elements 11, 14 and a straight line connecting the projector 11 and that part of the object 20 which is to be detected; and an angle formed between a straight line connecting the elements 11 and 14 and a straight line connecting the to-be-detected portion of the object) which are known and determined in accordance with the positional relation between the projector 11, camera 14 and object 20. Then, the image processing device derives numeral parameters (preferably, the stepwise changing amounts at the points A and C; the distance between the points A and B: the distance between the points B and C; and the angles $\theta 1$ and $\theta 2$) constituting model data which specifies the pattern element curve or the object 20, and causes the derived parameters to be stored into a built-in memory (not shown) of the device 15.

Subsequently, the model data creating and storing processes are repeated, while changing the orientation of the object 20, to thereby derive model data obtained when the object assumes several typical orientations.

When the robot or checking system is operated, the object 20 is disposed in the visual field of the camera 14. The vision system projects slitted light onto the object 20 to create a slitted light image, and analyzes the image, whereby the object recognition process is performed. In this embodiment, like the method disclosed in Japanese Patent Application No. 63-21518, strip-form light and reversal light reversed in light/darkness as compared with the former light are sequentially projected. This is equivalent to simultaneous projection of two slitted light beams.

More specifically, when strip-form pattern data is supplied from the image processing device 15 to the liquid crystal controller 13, corresponding liquid crystal segments of the liquid crystal shutter array 12 are set into the light transmitting state under the control of the controller 12, and strip-form light is projected onto the object 20 from the projector 11 which cooperates with the shutter array. The image processing device 15 receives, via the camera 14, an image (first image) of the object 20 obtained when the strip-form light is projected, and causes the image to be stored into one (first frame memory) of the frame memories 15a. Next, reversal pattern data is supplied from the image processing device 15 to the controller 13. As a result, reversal patterned light is projected onto the object 20, and an image (second image) of the object 20 obtained when the reversal patterned light is projected is stored into a second frame memory of the image processing device 15.

The image processing device 15 subtracts the second image from the first image for respective picture elements to derive a first difference image, and causes the image to be stored into a third frame memory. Also, the device subtracts the first image from the second image to derive a second difference image, and causes the derived image to be stored into a fourth frame memory. Then, the device performs raster-scanning of the first difference image to determine a brightness changing point for each scanning line of the image, and determines variations in the brightness of the second difference image in an area in the vicinity of that point which corresponds to the above brightness changing point. When it is determined that there is that position at which the first difference image changes from darkness to light and at the same time the second difference image changes from light to darkness, such a position is stored into a fifth memory. This determining and storing processes are repeated to thereby derive a slitted light image which corresponds to the upper edge of the strip-form light and which is shown by symbols a to e in Fig. 5. Likewise, positions at which the first difference image changes from light to darkness and the second difference image changes from darkness to light are sequentially determined, to thereby derive a slitted light image a' to e' which corresponds to the lower edge of the strip-form light.

Then, the image processing device 15 derives the positions of the points $b$, $c$, $d$, $c'$ and $d'$ on the slitted light images in the vision system setting space by means of trigonometric survey. Further, the device derives numeral parameters (stepwise variation amounts at the points b, b', d and d'; distance between the point b or b' and the point c or c'; distance between the point c or c' and the point d or d'; and inclinations of the lines bc, b'c', cd and c'd') which construct collate data for the slitted light images, the collate data corresponding to the model data, and causes the numerical parameters to be stored into the built-in memory. Next, the image processing device 15 determines whether or not the collate data coincides with any one of the model data. Preferably, a determination is made as to whether or not both of a difference between the distance parameter bc or b'c' of the collate data and the distance parameter AB of the model data, and a difference between the distance parameter cd or c'd' and the distance parameter BC fall within allowable error ranges. Then, if the result of the determination is affirmative, it is determined that the collate data coincides with the model data, and hence the object 20 assumes the orientation specified by the model data. In the meantime, since the distance parameters bc and b'c' and the inclinations of lines bc and b'c' vary in dependence on the orientation of the object 20, the orientation of the object 20 may be determined in accordance with these parameters.

If necessary, after the camera 14 is moved on the perpendicular on the light projection plane of the object 20 at an intersection between the lines bc' and b'c of Fig. 5, the image processing device 15 processes an image received via the camera 14, so as to measure the position and orientation of the object 20 in the vision system setting space, in particular, the position of the object along the $y$ axis in the space.

On the other hand, if the collate data does not coincide with any of the model data, new strip-form pattern data and new reversal pattern data are sequentially supplied from the image processing device 15 to the liquid crystal controller 13, so that strip-form light and reversal patterned light are sequentially projected on a different portion of the object 20, and the above-mentioned collate process is carried out.

## Claims

1. An object recognition method, comprising the steps of:

(a) extracting model data from an image of an object which assumes a particular orientation, the image of the object being obtained by projecting a plurality of coded patterned light beams on the object, the model data permitting the object assuming the particular orientation to be specifed;

(b) extracting collate data from an image of the object obtained by projecting slitted light on the object, the collate data permitting the object to be specified; and

(c) determining whether or not the collate data coincides with the model data.

2. An object recognition method according to claim 1, wherein said step (a) includes a step of selecting a pattern image element which constitutes part of the object from the image of the object obtained when the patterned light beams are projected, and a step of extracting the model data from the selected pattern picture element.

3. An object recognition method according to claim 1, wherein said step (b) includes a step of extracting the collate data from the image of that portion of the object on which the slitted light is projected.

4. An object recognition method according to claim 2, wherein the model data contains a numeral parameter representing a distance between opposite edges of the pattern picture element.

5. An object recognition method according to claim 3, wherein the collate data contains a numeral parameter representing a distance between opposite edges of the image of that portion of the object on which the slitted light is projected.

# FIG.1

LIQUID CRYSTAL CONTROLLER

13

11

12

14

CAMERA

20

16

15

IMAGE PROCESSING DEVICE

15a

17

FIG.2

FIG.3

20

20

FIG.4

B

C

A

y

x

20

FIG.5

a    b    c    d    e

a'   b'   c'   d'   e'

20

# INTERNATIONAL SEARCH REPORT

**I. CLASSIFICATION OF SUBJECT MATTER** (if several classification symbols apply. indicate all)

According to International Patent Classification (IPC) or to both National Classification and IPC

Int. Cl⁵ G01B11/00, G01B11/24

**II FIELDS SEARCHED**

Minimum Documentation Searched

| Classification System | Classification Symbols |
|---|---|
| IPC | G01B11/00, G01B11/24 |

Documentation Searched other than Minimum Documentation
to the Extent that such Documents are Included in the Fields Searched

| | |
|---|---|
| Jitsuyo Shinan Koho | 1960 - 1989 |
| Kokai Jitsuyo Shinan Koho | 1971 - 1990 |

**III. DOCUMENTS CONSIDERED TO BE RELEVANT**

| Category * | Citation of Document, with indication, where appropriate, of the relevant passages | Relevant to Claim No. |
|---|---|---|
| A | JP, A, 59-197813 (Ishikawajima-Harima Heavy Industries Co., Ltd.), 9 November 1984 (09. 11. 84), Line 3, upper left column to line 17, upper right column, page 2 (Family: none) | 1 - 5 |

* Special categories of cited documents

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure use exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 15, 1990 (15. 11. 90) | November 26, 1990 (26. 11. 90) |

| International Searching Authority | Signature of Authorized Officer |
|---|---|
| Japanese Patent Office | |

Form PCT ISA 210 (second sheet) (January 1985)